# EUROPÄISCHE PATENTSCHRIFT

(11) **EP 3 162 777 B1**
(45) Veröffentlichungstag und Bekanntmachung des Hinweises auf die Patenterteilung: **18.12.2019**
(21) Anmeldenummer: 15192127.7
(22) Anmeldetag: 29.10.2015
(51) Int. Cl.: C04B 28/12, C04B 40/06, C04B 28/02, C04B 111/00, C04B 111/10

(54) **AUSBLÜHREDUZIERTE BINDEMITTELZUSAMMENSETZUNG MIT GÜNSTIGER CO2 BILANZ**
BINDER COMPOSITION WITH REDUCED EFFLORESCENCE AND FAVOURABLE CO2 BALANCE
COMPOSITION DE LIANT A EFFLORESCENCE REDUITE A FAIBLE EMISSION DE CO2

(43) Veröffentlichungstag der Anmeldung: 03.05.2017
(73) Patentinhaber: STO SE & Co. KGaA, 79780 Stühlingen (DE)
(72) Erfinder: Holzer, Michael, 78315 Radolfzell (DE); Müller, Monika, 78166 Donaueschingen (DE)
(74) Vertreter: Gottschalk, Matthias

(56) Entgegenhaltungen:
- EP-A1- 1 767 506
- WO-A1-2011/098814
- WO-A1-2014/162097
- AT-B- 227 145
- DE-A1- 3 437 680
- DE-A1- 3 742 566
- DE-A1-102014 206 785
- FR-A1- 3 011 546

## Beschreibung

Die Erfindung betrifft eine zementfreie Bindemittelzusammensetzung, umfassend mindestens ein latent hydraulisches Bindemittel, nämlich Hüttensandmehl, Kalkhydrat sowie mindestens ein Hydrophobierungsmittel. Die Erfindung betrifft ferner Putze, Mörtel, und weitere Baumaterialien hergestellt unter Verwendung der erfindungsgemäßen Bindemittelzusammensetzung. Die Erfindung betrifft darüber hinaus die Verwendung von zementfreien Bindemittelzusammensetzungen zur CO₂-günstigen Herstellung von Putzen, Mörteln, Fliesen- und Natursteinklebern mit verminderter Neigung zu Ausblühungen.

### Hintergrund der Erfindung

Bindemittelzusammensetzungen zur Herstellung von Putzen, Mörteln und dergleichen basieren üblicherweise auf der Verwendung hydraulischer Bindemittel wie Zement, insbesondere Portlandzement und dergleichen. Beispielsweise beschreibt die deutsche Gebrauchsmusterschrift DE 29 825 081 U1 schnellst erstarrende hydraulische Bindemittelzusammensetzungen enthaltend sulfatträgerfreie Bindemittelkomponenten wie Portlandzementklinkermehl sowie Polycarboxylate als Fließmittel zur Modifizierung der Erstarrungszeit. Die deutsche Offenlegungsschrift DE 3 742 566 A1 beschreibt hydraulische Bindemittel mit einem Anteil an gemahlener Hochofenschlacke sowie Zusätzen von Kalk oder Zement und alkalischen Sulfaten als Anreger. Bereits die deutsche Patentschrift Nr. 290902 beschreibt darüber hinaus die Verwendung von Hochofenschlacken in vermahlener Form in Putzmörteln, wobei Schlackenkörner unterschiedlicher Teilchengrößen in geeigneter Mischung in Verbindung mit Kalkhydrat verwendet werden.

Aus WO 2011/098814 A1 ist eine zementfreie Bindemittelzusammensetzung bekannt, die Kalkhydrat, Puzzolan und Quarzsand enthält. Das Gewichtsverhältnis von Puzzolan zu Kalkhydrat liegt bei 1:7,33.

Aus ökologischen Gründen besteht ein zunehmender Bedarf für zementfreie Bindemittel bei der Mörtel-, Putz und Fliesenkleberherstellung. Bei der Herstellung üblicher Zemente wird in erheblichen Mengen CO₂ freigesetzt, so dass zementhaltige Bindemittelzusammensetzungen generell eine ungünstige CO₂ Bilanz aufweisen. Es wurde daher für die Herstellung von beispielsweise Putzen nach neuen Bindemittelzusammensetzungen gesucht, welche den Einsatz von Zement vermeiden und die Herstellung von zementfreien Bindemittelzusammensetzungen ermöglichen. Latent hydraulische Bindemittel wie Hüttensandmehl weisen im Vergleich zu Zement eine generell günstigere CO₂ Bilanz sowie einen geringeren Primärenergiebedarf auf. Die Verwendung dieser Reststoffe aus der Stahlproduktion zur Herstellung von Putzen und Mörteln ist daher grundsätzlich wünschenswert. Allerdings werden diese im Stand der Technik zur Erzielung der gewünschten Eigenschaften meist zusammen mit Zement und/oder Sulfaten wie Gips verwendet, wobei CO₂-intensive Materialien nur teilweise ersetzt werden. Derartige zementhaltige Bindemittel weisen zudem den Nachteil auf, mit der Zeit mineralische Ausblühungen an der Putzoberfläche zu bilden, welche die optische Qualität der verputzten Oberflächen vermindern, was insbesondere bei farbigen Oberputzen, Fugenmörteln und dergleichen unerwünscht ist.

Aufgabe der vorliegenden Erfindung ist es, eine Bindemittelzusammensetzung zur Verfügung zu stellen, welche die Herstellung von Putzen, Mörteln und Fliesen- bzw. Natursteinklebern mit günstiger CO₂ Bilanz ermöglicht. Eine weitere Aufgabe der Erfindung liegt in der Bereitstellung einer Bindemittelzusammensetzung, welche unerwünschte Ausblühungen an der Oberfläche vermeidet.

### Offenbarung der Erfindung

Zur Lösung dieser Aufgaben wird eine zementfreie Bindemittelzusammensetzung mit den Merkmalen des Anspruchs 1 bereitgestellt. Vorteilhafte Weiterbildungen der Erfindung sind in den jeweiligen Unteransprüchen aufgeführt.

Die vorliegende Erfindung betrifft eine zementfreie Bindemittelzusammensetzung, welche mindestens ein latent hydraulisches Bindemittel, nämlich Hüttensandmehl, in Kombination mit Kalkhydrat sowie mindestens einem Hydrophobierungsmittel umfasst.

"Zementfrei" im Sinne der vorliegenden Erfindung bedeutet, dass die erfindungsgemäßen Bindemittel- bzw. Trockenzusammensetzungen frei von Portlandzementklinker und/oder allgemein Zementklinker sind, das heißt vorzugsweise keine Zusätze von Zement nach DIN EN 197-1 (November 2011) wie z.B. Portlandzement, oder dergleichen aufweisen. Zement nach DIN EN 197-1 ist stets gekennzeichnet durch einen Gehalt an Portlandzementklinker. Im Allgemeinen sind solche Zemente ohne Anreger bzw. Zusatzstoffe mit Wasser abbindende anorganische Bindemittel, welche somit zu der Gruppe der hydraulischen Bindemittel gehören. Latent hydraulische Bindemittel fallen im Gegensatz dazu nicht unter den Begriff des Zements.

Die Verwendung von latent hydraulischen Bindemitteln als Zementersatz weist Vorteile hinsichtlich der CO₂-Bilanz der Bindemittelzusammensetzung auf. Als latent hydraulisches Bindemittel wird in diesem Zusammenhang ein Bindemittel verstanden, das allein durch die Zugabe von Wasser als Anmachflüssigkeit nicht aushärtet, sondern weitere Stoffe für das Starten der Aushärtung, sog. Anreger, wie beispielsweise alkalische Zusatzstoffe, z. B. Calciumhydroxid bzw. Kalkhydrat, benötigt. Das latent hydraulische Bindemittel ist ein zementklinkerfreies Bindemittel, d.h. Zement nach DIN EN 197-1 wird nicht als latent hydraulisches Bindemittel angesehen.

Das mindestens eine latent hydraulische Bindemittel ist Hüttensandmehl. Weitere latent hydraulische Bindemittel können ausgewählt werden ausTrassmehl, Ziegelmehl, Flugasche, Mikrosilika, Silikatstaub, Ölschiefer, und Metakaolin, sowie beliebigen Mischungen und Kombinationen hiervon. Hüttensandmehl wird durch Mahlen von Hüttensand hergestellt und hat latent hydraulische Eigenschaften. Übliche Anforderungen an Hüttensandmehl für die Verwendung in Baustoffen wie Mörtel sind zum Beispiel in der DIN EN 15167-1 (Dezember 2006) festgelegt. In erfindungsgemäßen Bindemittelzusammensetzungen wird vorzugsweise Hüttensandmehl aus glasiger granulierter Hochofenschlacke mit folgenden Eigenschaften verwendet:
Hüttensand entsteht durch schnelles Abkühlen einer Schlackenschmelze, die im Hochofen beim Schmelzen von Eisenerz gebildet wird. Eine typische Hüttensandmehlzusammensetzung enthält nach Masseanteilen mindestens zwei Drittel glasig erstarrte Schlacke und weist latent hydraulische Eigenschaften auf. Repräsentative Hüttensandmehle enthalten nach DIN EN 15167-1 an Masseanteilen typischerweise mindestens zwei Drittel Calciumoxid (CaO), Magnesiumoxid (MgO) und Siliziumdioxid (SiO₂), wobei die chemische Analyse als Oxide berechnet wurde. Der Rest enthält Aluminiumoxid (Al₂O₃) und geringe Anteile anderer Verbindungen. Das Massenverhältnis CaO + MgO/(SiO₂) ist üblicherweise größer als 1,0. Geeignete Hüttensandmehle weisen möglichst geringe Körnungen auf, wie z.B. bis zu 1 mm, vorzugsweise bis zu 0,8 mm, bevorzugt bis zu 0,5 mm und besonders bevorzugt bis zu 0,2 mm, üblicherweise bestimmt durch Siebung. Die erfindungsgemäß geeigneten Hüttensandmehle weisen eine spezifische Oberfläche bzw. von >2750 cm²/g, vorzugsweise von > 3000 cm²/g, besonders bevorzugt von > 4000 cm²/g, bestimmt mittels Blaine-Gerät gemäß DIN EN 196-6 (Mai 2010).

Erfindungsgemäße Bindemittelzusammensetzungen enthalten typischerweise 10 bis 80 Gew.-%, bevorzugt 20 bis 40 Gew.%, vorzugsweise 25 bis 35 Gew.-% und insbesondere bevorzugt etwa 30 Gew.-% latent hydraulisches Bindemittel, nämlich Hüttensandmehl, bezogen auf die gesamte, trockene Bindemittelzusammensetzung.

Sofern nicht anders angegeben beziehen sich in dieser Beschreibung alle Gew.-% Angaben auf das Gesamtgewicht der Trockenzusammensetzung und addieren sich in der Bindemittelzusammensetzung über alle Bestandteile auf 100 %.

Bei der Auswahl der latent hydraulischen Bindemittel aber auf jeden Fall des Hüttensandmehles ist neben den latent hydraulischen Eigenschaften gegebenenfalls auch noch eine möglichst helle neutrale Farbe zu berücksichtigen, um den Einsatz in tönbaren bzw. färbbaren Oberputzen zu gewährleisten. Die Farbe sollte vorzugsweise bei Oberputzen möglichst weiß sein, ist jedoch bei den meisten Anwendungen unbeachtlich.

Die erfindungsgemäßen zementfreien Bindemittelzusammensetzungen umfassen ferner Kalkhydrat. Im wesentlichen ist dies chemisch gesehen Ca(OH)₂, Calciumhydroxid, und wird auch als Kalkhydrat oder oft einfach als Kalk bezeichnet. Geeignet sind zum Beispiel allgemein Baukalke und auf Raumbeständigkeit geprüfte Kalkhydrate für Putze und Mörtel nach DIN EN 459-1 (Juli 2015), wie Weißkalk (CL70, CL80, CL90), Dolomitkalk (DL80/ DL85) sowie hydraulischer Kalk (HL2 /HL3,5/HL5), natürliche hydraulische Kalke, oder Romankalk. Vorzugsweise verwendet werden Weißkalke wie ungelöschter Kalk und Kalkhydrat, Dolomitkalke, natürliche hydraulische Kalke, formulierte Kalke und hydraulische Kalke und beliebige Mischungen daraus. Die bevorzugte Zugabe von Calciumhydroxid bzw.

Kalkhydrat in erfindungsgemäßer Bindemittelzusammensetzung dient in erster Linie als Anreger bzw. Härter für die latent- hydraulischen Bindemittel, damit diese bei Wasserzusatz abbinden können.

Die erfindungsgemäße Bindemittelzusammensetzung enthält bis zu 20 Gew.-%, vorzugsweise bis zu 10 Gew.-%, typischerweise 0,1 - 20 Gew.-%, bevorzugt 0,1 - 10 %, und besonders bevorzugt 1 - 5 Gew.-% Kalkhydrat, bezogen auf die trockene Gesamtzusammensetzung.

In den erfindungsgemäßen zementfreien Bindemittelzusammensetzungen wird das Gewichtsverhältnis von Hüttensandmehl zu Kalkhydrat im Bereich von 5:1 bis 30:1, vorzugsweise 10:1 bis 20:1, insbesondere bei 15:1 eingestellt.

Zur Einstellung der Verarbeitungs- und Abbindezeit können der erfindungsgemäßen zementfreien Bindemittelzusammensetzung übliche Beschleuniger zugesetzt werden. Durch Zusetzen eines Beschleunigers kann die Geschwindigkeit des Aushärtens der mit Anmachwasser angemachten Bindemittelzusammensetzung gezielt gesteuert werden. Erfindungsgemäße zementfreie Bindemittelzusammensetzungen enthalten daher vorzugsweise mindestens einen Beschleuniger. Als Beschleuniger geeignet sind beispielsweise Alkali- oder Erdalkalicarbonate, Alkali- oder Erdalkalibicarbonate, Alkali- und Erdalkalichloride, Aluminiumhaltige Verbindungen wie z.B. Al(OH)₃, Alkali- und Erdalkalihydroxide, Alkalisalze der Salpetersäure, Silikate, Alkali- oder Erdalkalisalze organischer Säuren wie z.B. Formiate, Acetate, oder hydrothermale gebildete CSH-Phasen wie Tobermorit, CSH-(Calcium-Silikat-Hydrat)-Impfkristalle, sowie Mischungen aus den genannten Beschleunigern.

Besonders bevorzugt ist die Verwendung von Calciumformiat als Beschleuniger, welches sich für die erfindungsgemäßen Bindemittelzusammensetzungen als besonders geeignet erwiesen hat.

Die Menge an Beschleuniger kann auf die gegebenen oder erwarteten Verarbeitungsbedingungen, wie beispielsweise Temperatur oder Feuchtigkeit, eingestellt werden. Die geeignete Menge an Beschleuniger wird üblicherweise durch Vorversuche bestimmt und entsprechend der gewünschten Aushärtezeit und dem jeweiligen Anwendungszweck eingestellt. Üblicherweise liegt die Menge an Beschleuniger, vorzugsweise Calciumformiat, in erfindungsgemäßen Bindemittelzusammensetzungen bei 0,1 bis 3 Gew.-%, vorzugsweise 0,2 bis 2, besonders bevorzugt 0,3 bis 1 Gew.-%.

Für die Verwendung beispielsweise in Putzrezepturen oder Fliesen- und Natursteinklebern ist es gegebenenfalls vorteilhaft, die erfindungsgemäßen Bindemittelzusammensetzungen hinsichtlich der Wasserabweisung anzupassen. Die üblicherweise in zementhaltigen Bindemittelzusammensetzungen verwendeten Hydrophobierungsmittel wie Oleate und Stearate sind überraschenderweise hinsichtlich ihrer Wirkung in erfindungsgemäßen Bindemittelzusammensetzungen eingeschränkt, da ggf. Unverträglichkeiten mit sonstigen Bestandteilen beobachtet werden. In erfindungsgemäßen Bindemittelzusammensetzungen wird daher als Hydrophobierungsmittel vorzugsweise Laurinsäure, Salze und Ester der Laurinsäure, Alkali-, Erdalkali- und Metallsalze der Laurinsäure eingesetzt. Als besonders bevorzugt wird Calciumlaurat eingesetzt, welches sich als stabilisierend und kompatibler erwiesen hat, gegebenenfalls in Mischungen mit Oleaten und/oder Stearaten.

Laurate wie Calciumlaurat sind als Gleitmittel unter anderem aus der Kunststoffherstellung bekannt. Die besonders in der erfindungsgemäßen Bindemittelkombination gute hydrophobe Wirkung der Laurinsäure, Salze und Ester der Laurinsäure, Alkali-, Erdalkali- und Metallsalze der Laurinsäure ist überraschenderweise ferner verbunden mit einer ausblühreduzierenden Wirkung. Herkömmliche Putze und Mörtel mit Portlandzement und anderen zementhaltigen Bindemitteln haben den Nachteil, dass es im Lauf der Zeit zu Ausblühungen auf den Oberflächen kommen kann. Ausblühungen bei derartigen Bindemittelzusammensetzungen bestehen im Wesentlichen aus weißlichem Calciumcarbonat, welches aus dem bei der (Portland)-Zementhydratation entstehenden Calciumhydroxid (=Portlandit) und dem CO₂ aus der Luft gebildet wird.

Ohne auf eine bestimmte Theorie festgelegt werden zu wollen, wird bei der erfindungsgemäßen Bindemittelzusammensetzung bei der Hydratation kein Calciumhydroxid neu gebildet, sondern das zur Anregung benötigte Calciumhydroxid durch das Hüttensandmehl sogar teilweise "verbraucht" und in kalkärmere CSH-Phasen eingebaut. Deshalb ist das Angebot an Calciumhydroxid, welches mit dem CO₂ aus der Luft zu weißlichem Calciumcarbonat und somit potentiellen Ausblühungen reagieren kann, deutlich reduziert. Die Zugabe von erfindungsgemäßen Hydrophobierungsmitteln führt weiterhin zu einer geringen kapillaren Aufnahme von Wasser, welches bei der chemischen Reaktion von Calciumhydroxid und CO₂ zu Calciumcarbonat als Reaktionspartner (H₂O + CO₂ = H₂CO₃) benötigt wird. Durch die geringe Wasseraufnahme wird die fortlaufende Reaktion zu Calciumcarbonat behindert und die Neigung zu Ausblühungen reduziert.

Überraschenderweise wurde festgestellt, dass das erfindungsgemäße Bindemittel-System neben einer günstigeren CO₂ Bilanz auch den Vorteil aufweist, dass Ausblühungen wie sie bei herkömmlichen zementhaltigen Bindemitteln auftreten vermieden werden können. Insbesondere bei farbigen Oberputzen, Fugenmörteln sowie Fliesen- und Natursteinkleber sind derartige Ausblühungen aus ästhetischen Gründen unerwünscht.

Die Erfindung betrifft daher auch die Verwendung einer hierin beschriebenen zementfreien Bindemittelzusammensetzung bzw. die Verwendung von Calciumlaurat in zementfreien Bindemittelzusammensetzungen zur CO₂-günstigen Herstellung von Putzen, Mörteln, Fliesen- und Natursteinklebern mit verminderter Neigung zu Ausblühungen.

Üblicherweise liegt die Menge an Hydrophobierungsmittel, vorzugsweise Calciumlaurat, in erfindungsgemäßen Bindemittelzusammensetzungen bei bis zu 2 Gew.-%, bevorzugt bei 0,01 bis 2 Gew.-%, vorzugsweise bei 0,05 bis 1 Gew.-%, besonders bevorzugt bei 0,1 bis 0,8 Gew-% und insbesondere bei etwa 0,5 Gew.-%, bezogen auf die trockene Bindemittelzusammensetzung.

Die Bindemittelzusammensetzungen können ferner weitere Additive und/oder Füllstoffe umfassen.

In einer bevorzugten Weiterbildung der vorliegenden Erfindung ist mindestens ein in Baustoffmischungen übliches Additiv enthalten, ausgewählt aus der Gruppe bestehend aus Dispergiermitteln, Fließ(hilfs)mittel, Verzögerer, Biozide wie z.B. Algizide, Fungizide, Netzmittel, Porenbildner, Entschäumer, Entstaubungsmittel, Wasserretentionsmittel, Fasern, Füllstoffe, Dispersionspulver, Flammschutzmittel und Thixotropiermittel.

Die Menge an Additiven in erfindungsgemäßen Bindemittelzusammensetzungen liegt üblicherweise bei bis zu 10 Gew.-%, vorzugsweise bei 0,1 bis 10 Gew.-%, bevorzugt bei 0,2 bis 8 Gew.-%, besonders bevorzugt bei 0,3 bis 5 Gew.-%, als Summe über alle Additive, ausgenommen Beschleuniger und Hydrophobierungsmittel, und bezogen auf die trockene Gesamtzusammensetzung.

Gemäß einer anderen bevorzugten Weiterbildung der vorliegenden Erfindung wird der Bindemittelzusammensetzung zumindest ein Farbpigment zugesetzt. Somit können der Bindemittelzusammensetzung farbgebende Eigenschaften verliehen werden, die diese auf die endgültigen Produkte, wie beispielsweise Mörtel oder Putze, weitergeben kann. Bevorzugt werden anorganische Farbpigmente verwendet, insbesondere auf der Basis von Metalloxiden, z.B. Eisenoxide und/oder Titandioxid. Derartige Farbpigmente werden in einer Menge von bis zu 10 Gew.-%, bevorzugt 0,01 bis 10 Gew.-%, weiter bevorzugt in einer Menge von 0,05 bis 5 Gew.-%, besonders bevorzugt 0,1 bis 4 Gew.-% zugegeben, bezogen auf die trockene Gesamtzusammensetzung.

Als Füllstoff können organische und/oder anorganische Füllstoffe verwendet werden. Organische und/oder anorganische Füllstoffe können als Mehle und/oder Körnungen und/oder Leichtfüllstoffe verwendet werden. Auch Mischungen der genannten Füllstoffe werden im Rahmen dieser Erfindung als Füllstoff bezeichnet bzw. unter diesem Begriff zusammengefasst.

Erfindungsgemäß geeignet sind silikatische und/oder karbonatische Mehle, bevorzugt sind karbonatische Gesteinsmehle. Die Mehle erfüllen vorzugsweise die Kornzusammensetzung für Füller nach DIN EN 12620 (Juli 2008). Demnach liegt die Körnung nach der normgemäßen Bestimmung bei < 0,125 mm für 85 - 100 Gew.% des Mehls.

Als Füllstoffe oder Bestandteil von Füllstoffmischungen in der erfindungsgemäßen Bindemittelzusammensetzung werden Mehle, sofern vorhanden, typischerweise in einer Menge von 0,1 - 70 Gew.-%, weiter bevorzugt von 1 bis 30 Gew.-%, besonders bevorzugt von 5 - 20 Gew.-%, bezogen auf die trockene Gesamtzusammensetzung, verwendet.

Erfindungsgemäß geeignete Körnungen sind bevorzugt anorganische Körnungen, die ausgewählt werden aus karbonatischen und /oder silikatischen Gesteins- bzw. Mineralkörnungen. Die Körnungen können je nach Anwendungszweck eine Größe bis zu ca. 6 mm aufweisen, beispielsweise bei Oberputzen, ansonsten allgemein typischerweise bis zu 2 mm, beispielsweise von 1 bis 1500 µm, meistens von 0,1 bis 1,4 mm, jeweils mittels Siebung bestimmt. Körnungen werden, sofern vorhanden, erfindungsgemäß typischerweise in einer Menge von 0,1 - 70 Gew.-%, bevorzugt von 10 - 65 Gew.-% und besonders bevorzugt von 30 - 60 Gew.-%, bezogen auf die trockene Gesamtzusammensetzung, verwendet.

Erfindungsgemäß geeignete Leichtfüllstoffe haben ein Schüttgewicht < 1 kg/l, ermittelt nach DIN EN 459-2 (Dezember 2010), bevorzugt von 10 g/L bis 800 g/L. Sie können ausgewählt werden aus der Gruppe der anorganischen Leichtfüllstoffe wie z. B. geblähten Perliten, Bims, Blähton, Blähschiefer, Blähglasgranulat, Leichtfüllstoff aus Tobermorit, Hohlglaskugeln und/oder der organischen Leichtfüllstoffe wie z. B. Perlen und/oder Granulate aus EPS (EPS = expandiertes Polystyrol) oder Perlen und/oder Granulate aus Biokunststoffen sowie beliebigen Mischungen von Leichtfüllstoffen. Die Größe beträgt meist bis zu 2 mm, bevorzugt bis 1,5 mm. Die Leichtfüllstoffe werden, sofern vorhanden, erfindungsgemäß in einer Menge typischerweise von 0,1 - 50 Gew.-%, bevorzugt von 0,2 - 25 Gew.-% und besonders bevorzugt von 0,3 - 10 Gew.-%, bezogen auf die trockene Gesamtzusammensetzung, verwendet.

In der erfindungsgemäßen Bindemittelzusammensetzung werden typischerweise 10 bis 90 Gew.-%, weiter bevorzugt 20 bis 80 Gew.-%, vorzugsweise 30 bis 70 Gew.-%, und insbesondere etwa 62 Gew. % Füllstoffe verwendet, bezogen auf die trockene Gesamtzusammensetzung.

Gemäß einem bevorzugten Aspekt der Erfindung ist die erfindungsgemäße Bindemittelzusammensetzung nicht nur zementfrei, sondern auch frei von wasserlöslichen Sulfatphasen, insbesondere frei von der Rezeptur zugegebenen Ca-Sulfatphasen wie Gips und Halbhydrat, z. B. gemahlener Gips bzw. gemahlenes Halbhydrat. Das Vermeiden derartiger Stoffe bzw. Zusätze führt zu einer weiteren Verringerung der Ausblühneigung, und wirkt sich positiv auf die Langzeitstabilität der mit erfindungsgemäßen Bindemittelzusammensetzungen hergestellten Putze aus.

In einer besonders bevorzugten beispielhaften Zusammensetzung besteht die erfindungsgemäße zementfreie Bindemittelzusammensetzung aus:
20 bis 40 Gew.-%, vorzugsweise 25 bis 35 Gew.-% latent hydraulisches Bindemittel, nämlich Hüttensandmehl;
0,1 bis 10 Gew.-%, vorzugsweise 1 bis 5 Gew.-% Kalkhydrat;
0,2 bis 2 Gew.-%, vorzugsweise 0,3 bis 1 Gew.-% Beschleuniger, vorzugsweise Calciumformiat,
0,05 bis 1 Gew.-%, vorzugsweise 0,1 bis 0,8 Gew.-% Hydrophobierungsmittel, insbesondere Calciumlaurat;
0,2 bis 8 Gew.-%, vorzugsweise 0,3 bis 5 Gew.-% Additive;
20 bis 80 Gew.-%, vorzugsweise 30-70 Gew.-% Füllstoffe,
wobei sich alle Gew.-% Angaben auf das Gesamtgewicht der Trockenzusammensetzung beziehen und sich in der Bindemittelzusammensetzung auf 100 % addieren.

Üblicherweise wird die Bindemittelzusammensetzung als Trockenmischung bereitgestellt. Diese Trockenmischung kann dann mit einer Anmachflüssigkeit, bevorzugt mit Wasser, versetzt werden. Dadurch wird eine Mischung erhalten, die als Klebe- und Armierungsputzen, Unter- und Oberputzen, Fliesenkleber, Natursteinkleber, Fugenmörtel, Fugenfüller, Spachtelprodukt, Bodenbeschichtung, Estrich, verwendet werden kann. Auch im Bereich der Betoninstandsetzung können die erfindungsgemäßen zementfreien Bindemittelzusammensetzungen verwendet werden. Die Verarbeitung der Mischung kann auf herkömmliche Art erfolgen, beispielsweise durch Aufstreichen, Aufschlämmen, Aufspritzen, Aufspachteln, Aufziehen und dergleichen.

### Beispiele

### Beispiel 1

Eine beispielhafte Bindemittelzusammensetzung hat folgende Rezeptur:

| | |
|---|---|
| 30 Gew.-% | Hüttensandmehl |
| 2 Gew.-% | Kalkhydrat |
| 0,3 Gew.-% | Calciumformiat |
| 0,5 Gew.-% | Calciumlaurat |
| 5 Gew.-% | sonstige Additive, insbesondere Wasserretentionsmittel und Dispersionspulver |
| 2 Gew.-% | Leichtfüllstoffe |
| 47 Gew.-% | Gesteinskörnung |
| 13,2 Gew.-% | Gesteinsmehl. |

Diese Zusammensetzung kann verwendet werden zur Herstellung von Klebe- und Armierungsputzen.

### Beispiel 2

Eine beispielhafte Bindemittelzusammensetzung für einen farbigen Oberputz hat folgende Rezeptur:

| | |
|---|---|
| 30 Gew.-% | Hüttensandmehl |
| 2 Gew.-% | Kalkhydrat |
| 0,5 Gew.-% | Calciumformiat |
| 0,5 Gew.-% | Calciumlaurat |
| 2,5 Gew.-% | sonstige Additive |
| 1,5 Gew-% | Farbpigment |
| 49 Gew.-% | Gesteinskörnung |
| 14 Gew.-% | Gesteinsmehl. |

## Patentansprüche

1. Zementfreie Bindemittelzusammensetzung, umfassend:
a) mindestens ein latent hydraulisches Bindemittel, nämlich Hüttensandmehl;
b) Kalkhydrat, sowie
c) mindestens ein Hydrophobierungsmittel
wobei das Gewichtsverhältnis von Hüttensandmehl zu Kalkhydrat im Bereich von 5:1 bis 30:1 liegt.

2. Bindemittelzusammensetzung nach Anspruch 1, ferner umfassend mindestens einen Beschleuniger.

3. Bindemittelzusammensetzung nach Anspruch 2, wobei der Beschleuniger Calciumformiat ist.

4. Bindemittelzusammensetzung nach einem der vorhergehenden Ansprüche, wobei weitere latent hydraulische Bindemittel ausgewählt sind aus der Gruppe bestehend aus Trassmehl, Ziegelmehl, Flugasche, Mikrosilika, Silikatstaub, Ölschiefer, und Metakaolin.

5. Bindemittelzusammensetzung nach einem der vorhergehenden Ansprüche, wobei das Gewichtsverhältnis von Hüttensandmehl zu Kalkhydrat im Bereich 10:1 bis 20:1, insbesondere bei 15:1 liegt.

6. Bindemittelzusammensetzung nach einem der vorhergehenden Ansprüche, wobei das Hydrophobierungsmittel Calciumlaurat ist.

7. Bindemittelzusammensetzung nach einem der vorhergehenden Ansprüche, ferner umfassend Additive und/oder Füllstoffe.

8. Bindemittelzusammensetzung nach Anspruch 7, wobei die Additive ausgewählt sind aus mindestens einem aus Dispergiermitteln, Fließ(hilfs)mittel, Verzögerer, Biozide wie z.B. Algizide, Fungizide, Netzmittel, Porenbildner, Entschäumer, Entstaubungsmittel, Wasserretentionsmittel, Fasern, Füllstoffe, Dispersionspulver, Flammschutzmittel und Thixotropiermittel.

9. Bindemittelzusammensetzung nach einem der vorhergehenden Ansprüche, wobei die Füllstoffe ausgewählt sind aus mindestens einem aus organischen und/oder anorganischen Füllstoffen, vorzugsweise Mehle und/oder Körnungen und/oder Leichtfüllstoffe.

10. Bindemittelzusammensetzung nach Anspruch 9, wobei die Füllstoffe ausgewählt sind aus karbonatischen und /oder silikatischen Gesteins- bzw. Mineralkörnungen und/oder Gesteins- bzw. Mineralmehlen, gegebenenfalls in Mischung mit Leichtfüllstoffen.

11. Bindemittelzusammensetzung nach Anspruch 9 oder 10, wobei die Leichtfüllstoffe ausgewählt sind aus mineralischen oder organischen Leichtfüllstoffen wie geblähten Perliten, Bims, Blähton, Blähschiefer, Blähglasgranulat, Leichtfüllstoff aus Tobermorit, Hohlglaskugeln und/oder der organischen Leichtfüllstoffe wie z. B. Perlen und/oder Granulate aus EPS (EPS = expandiertes Polystyrol) oder Perlen und/oder Granulate aus Biokunststoffen, sowie Mischungen davon.

12. Bindemittelzusammensetzung nach einem der vorhergehenden Ansprüche, wobei die Zusammensetzung frei von wasserlöslichen Sulfatphasen, insbesondere Gips und Halbhydrat, ist.

13. Bindemittelzusammensetzung nach einem der vorhergehenden Ansprüche, ausgewählt aus Klebe- und Armierungsputzen, Oberputzen und dergleichen, Mörtel, Fugenmörtel, Fliesenkleber, Natursteinkleber, Estrich, und Betoninstandsetzungsmassen.

14. Bindemittelzusammensetzung nach einem der vorhergehenden Ansprüche, bestehend aus:
20 bis 40 Gew.-%, vorzugsweise 25 bis 35 Gew.-% latent hydraulisches Bindemittel, nämlich Hüttensandmehl;
0,1 bis10 Gew.-%, vorzugsweise 1 bis 5 Gew.-% Kalkhydrat;
0,2 bis 2 Gew.-%, vorzugsweise 0,3 bis 1Gew.-% Beschleuniger, vorzugsweise Calciumformiat,
0,05 bis 1 Gew.-%, vorzugsweise 0,1 bis 0,8 Gew.-% Hydrophobierungsmittel, insbesondere Calciumlaurat;
0,2 bis 8 Gew.-%, vorzugsweise 0,3 bis 5 Gew.-% Additive;
20 bis 80 Gew.-%, vorzugsweise 30-70 Gew.-% Füllstoffe,
wobei sich alle Gew.-% Angaben auf das Gesamtgewicht der trockenen Bindemittelzusammensetzung beziehen und sich in der Bindemittelzusammensetzung auf 100 % addieren.

15. Verwendung einer zementfreien Bindemittelzusammensetzung nach einem der vorhergehenden Ansprüche zur CO₂ -günstigen Herstellung von Putzen, Mörteln, Fliesen- und Natursteinklebern mit verminderter Neigung zu Ausblühungen.

## Claims

1. A cement-free binder composition, comprising:
a) at least one latent hydraulic binder, namely blast furnace slag;
b) hydrated lime, as well as
c) at least one hydrophobicity agent,
wherein the ratio by weight of blast furnace slag to hydrated lime is in the range from 5:1 to 30:1.

2. The binder composition as claimed in claim 1, further comprising at least one accelerator.

3. The binder composition as claimed in claim 2, wherein the accelerator is calcium formate.

4. The binder composition as claimed in one of the preceding claims, wherein further latent hydraulic binders are selected from the group consisting of pozzolanic powder, brick dust, fly ash, microsilica, silica dust, oil shale and metakaolin.

5. The binder composition as claimed in one of the preceding claims, wherein the ratio by weight of blast furnace slag to hydrated lime is in the range 10:1 to 20:1, and in particular is 15:1.

6. The binder composition as claimed in one of the preceding claims, wherein the waterproofing agent is calcium laurate.

7. The binder composition as claimed in one of the preceding claims, further comprising additives and/or fillers.

8. The binder composition as claimed in claim 7, wherein the additives are selected from at least one out of dispersing agents, flow additives, retarders, biocides such as, for example, algicides or fungicides, wetting agents, pore-forming agents, defoaming agents, lowdust additives, water retention additives, fibres, fillers, dispersing agents, flame retardants and thixotropic additives.

9. The binder composition as claimed in one of the preceding claims, wherein the fillers are selected from at least one of organic and/or inorganic fillers, preferably flours and/or aggregates and/or lightweight fillers.

10. The binder composition as claimed in claim 9, wherein the fillers are selected from carbonaceous and/or siliceous rock aggregates or mineral aggregates and/or rock flours or mineral flours, optionally blended with lightweight fillers.

11. The binder composition as claimed in claim 9 or claim 10, wherein the lightweight fillers are selected from mineral or organic lightweight fillers such as expanded perlites, pumice, expanded clay, expanded shale, expanded glass granulate, lightweight fillers formed from tobermorite, hollow glass spheres and/or from organic lightweight fillers such as, for example, beads and/or granulates formed from EPS (EPS = expanded polystyrene) or beads and/or granulates formed from bioplastics, as well as blends thereof.

12. The binder composition as claimed in one of the preceding claims, wherein the composition is free from water-soluble sulphate phases, in particular gypsum and hemihydrates.

13. The binder composition as claimed in one of the preceding claims, selected from bonding plasters and reinforcement plasters, finishing plasters and the like, mortar, grout, tile adhesive, natural stone adhesive, screed and concrete restoration materials.

14. The binder composition as claimed in one of the preceding claims, consisting of:
20% to 40% by weight, preferably 25% to 35% by weight, of latent hydraulic binder, namely blast furnace slag;
0.1% to 10% by weight, preferably 1% to 5% by weight, of hydrated lime;
0.2% to 2% by weight, preferably 0.3% to 1% by weight, of accelerator, preferably calcium formate;
0.05% to 1% by weight, preferably 0.1% to 0.8% by weight, of waterproofing agent, in particular calcium laurate;
0.2% to 8% by weight, preferably 0.3% to 5% by weight, of additives;
20% to 80% by weight, preferably 30-70% by weight, of fillers;
wherein all details given as a % by weight are with respect to the total weight of the dry binder composition and add up to 100% in the binder composition.

15. Use of a cement-free binder composition as claimed in one of the preceding claims, for the low CO₂ production of plasters, mortars, tile adhesives and natural stone adhesives with a reduced tendency to effloresce.

## Revendications

1. Composition de liant exempte de ciment, comprenant :
a) au moins un liant hydraulique sous forme latente, à savoir un laitier granulé broyé ;
b) un hydrate de chaux, ainsi
c) qu'au moins un agent hydrophobant,
le rapport en poids du laitier granulé broyé à l'hydrate de chaux se situant dans l'ordre de 5 : 1 à 30 : 1.

2. Composition de liant selon la revendication 1, comprenant par ailleurs au moins un accélérateur.

3. Composition de liant selon la revendication 2, l'accélérateur étant un formiate de calcium.

4. Composition de liant selon l'une quelconque des revendications précédentes, d'autres liants hydrauliques sous forme latente étant choisis dans le groupe composé de la farine de trass, de la farine de brique, de la cendre volante, des microsilices, de la poussière de silice, du schiste bitumineux, et du métakaolin.

5. Composition de liant selon l'une quelconque des revendications précédentes, le rapport en poids du laitier granulé broyé à l'hydrate de chaux se situant dans l'ordre de 10 : 1 à 20 : 1, notamment à environ 15 : 1.

6. Composition de liant selon l'une quelconque des revendications précédentes, l'agent hydrophobant étant un laurate de calcium.

7. Composition de liant selon l'une quelconque des revendications précédentes, comprenant par ailleurs des additifs et/ou des agents de charge.

8. Composition de liant selon la revendication 7, les additifs étant choisis parmi au moins des agents de dispersion, des agents (additifs) de fluidification, des retardateurs, des biocides comme par exemple des algicides, des fongicides, des agents mouillants, des agents porogènes, des agents anti-mousse, des agents anti-poussière, des agents rétenteurs d'eau, des fibres, des agents de charge, de la poudre de dispersion, des agents ignifuges et des agents thixotropes.

9. Composition de liant selon l'une quelconque des revendications précédentes, les agents de charge étant sélectionnés parmi au moins un agent de charge organique et/ou inorganique, de préférence des farines et/ou des grains et/ou des agents de charge légers.

10. Composition de liant selon la revendication 9, les agents de charge étant sélectionnés parmi les poudres de roche et/ou les poudres minérales carbonatées et/ou siliceuses, respectivement les farines minérales, mélangées à des agents de charge légers.

11. Composition de liant selon la revendication 9 ou 10, les agents de charge légers étant sélectionnés parmi les agents de charge légers minéraux ou organiques, comme les perlites expansées, la pierre ponce, l'argile expansée, la vermiculite, les granulés de verre soufflés, un agent de charge léger de tobermorite, les billes de verre creuses et/ou les agents de charge légers organiques, comme par exemple les perles et/ou les granulés d'EPS (EPS = polystyrène expansé) ou les perles et/ou les granulés de bioplastiques, ainsi que leurs mélanges.

12. Composition de liant selon l'une quelconque des revendications précédentes, la composition étant exempte de phases sulfatées hydrosolubles, notamment de gypse ou de semi-hydrate.

13. Composition de liant selon l'une quelconque des revendications précédentes, choisie parmi les enduits colles et les enduits d'armature, les enduits de finition et similaires, le mortier, le mortier de jointement, la colle à carrelage, la colle à pierres naturelles, la chape et les masses de restauration du béton.

14. Composition de liant selon l'une quelconque des revendications précédentes, composée de :
20 à 40 % en poids, de préférence de 25 à 35 % en poids d'un liant hydraulique sous forme latente, à savoir d'un laitier granulé broyé ;
0,1 à 10 % en poids, de préférence de 1 à 5 % en poids d'un hydrate de chaux ;
0,2 à 2 % en poids, de préférence de 0,3 à 1 % en poids d'un accélérateur, de préférence d'un formiate de calcium,
0,05 à 1 % en poids, de préférence de 0,1 à 0,8 % en poids d'un agent hydrophobant, notamment d'un laurate de calcium ;
0,2 à 8 % en poids, de préférence de 0,3 à 5 % en poids d'additifs ;
20 à 80 % en poids, de préférence de 30 à 70 % en poids d'agents de charge,
toutes les mentions de % en poids se rapportant au poids total de la composition de liant et s'additionnant à 100 % dans la composition de liant.

15. Utilisation d'une composition de liant exempte de ciment selon l'une quelconque des revendications précédentes pour la fabrication à CO₂ favorable d'enduits, de mortiers, de colles à carrelage et de colles pour pierres naturelles à tendance réduite aux efflorescences.
